# EUROPÄISCHE PATENTSCHRIFT

(11) **EP 0 546 462 B1**
(45) Veröffentlichungstag und Bekanntmachung des Hinweises auf die Patenterteilung: **05.02.1997**
(21) Anmeldenummer: 92120700.7
(22) Anmeldetag: 04.12.1992
(51) Int. Cl.: A47B 97/04

(54) **Wechsel-Wandtafelsystem zur visuellen Kommunikation**
Wall board exchange system for visual communication
Système de changement de tableaux muraux pour communication visuelle

(30) Priorität: 13.12.1991 DE 9115475 U
(43) Veröffentlichungstag der Anmeldung: 16.06.1993
(73) Patentinhaber: ProCent Patent- und Verwaltungs AG, 8034 Zürich (CH)
(72) Erfinder: Behr, Karl-Günther, Dipl.-Ing., W-6301 Biebertal-Vetzberg (DE)
(74) Vertreter: Kossobutzki, Walter, Dipl.-Ing.(FH)

(56) Entgegenhaltungen:
- GB-A- 11 108
- GB-A- 13 435
- US-A- 2 761 640
- US-A- 3 512 745

## Beschreibung

Die Erfindung bezieht sich auf ein Wechsel-Wandtafelsystem für die visuelle Kommunikation, bestehend aus mindestens einer an einer Wand befestigbaren Profilschiene und mehreren auswechselbaren Wandtafel-Einheiten, die jeweils an mindestens einer Tragstange höheneinstellbar geführt und über dieselbe in die Profilschiene einhängbar sind.

Derartige Wechsel-Wandtafelsysteme sind bekannt und bestehen aus der Kombination einer an der Wand fest installierten Profilschiene, in die mehrere unterschiedliche Wandtafeln, es können auch Flipcharts, Projektionswände oder dergleichen sein, über Tragstangen einhängbar sind. Dabei sind die Wandtafel-Einheiten stufenweise in meist konstanten Abständen an den Tragstangen höheneinstellbar.

Die US-PS 2 761 640 offenbart ein Wandtafelsystem, bei dem an der Rückseite der Tafel zwei Schienen ortsfest angeordnet sind, die einen U-förmigen Querschnitt aufweisen. Im Steg dieser Schienen sind rechteckige Öffnungen eingearbeitet, die untereinander einen vorgegebenen, gleichmäßigen Abstand voneinander aufweisen. An einer Wand sind nun für jede Schiene jeweils zwei Tragkörper befestigt, die eine besondere Halterung aufweisen. Jede Halterung besteht aus einem verhältnismäßig kurzen, aus Blech gefertigten Stanzteil, welches mit Traglappen und Führungslappen versehen ist. In diese Halterungen können nun die Schienen mit ihren Öffnungen eingehängt werden, wobei der Abstand der Öffnungen voneinander ein stufenweise Höheneinstellung ermöglicht.

Die US-PS 3 512 745 offenbart eine Staffelei, bei der zwei an Schwenkhebeln befestigte Klemmstücke vorgesehen sind. Über eine Feder werden die Schwenkhebel nun in einer solchen Lage gehalten, daß die Klemmstücke eine Klemmwirkung auf ein höheneinstellbares Teil ausüben. Mittels eines Pedals, welches über eine Schubstange mit der Feder verbunden ist, kann die Klemmung gelöst und damit das bewegbare Führungsteil verschoben werden.

Gegenüber diesem Stand der Technik liegt der vorliegenden Erfindung die Aufgabe zugrunde, ein Wechsel-Wandtafelsystem zu schaffen, bei dem die Wandtafel-Einheiten an mindestens einer Tragestange stufenlos höheneinstellbar sind.

Zur Lösung dieser Aufgabe wird gemäß der Erfindung bei einem Wechsel-Wandtafelsystem der eingangs beschriebenen Gattung vorgeschlagen, daß jede Wandtafel-Einheit über eine unter einer Federkraft stehende, manuell lösbare Klemmvorrichtung an der Tragstange gesichert und stufenlos höheneinstellbar ist.

Durch diese Ausgestaltung ist es möglich, jede Wandtafel-Einheit stufenlos in ihrer Höhenlage an mindestens einer Tragstange zu verschieben.

Weitere Merkmale eines Wechsel-Wandtafelsystems gemäß der Erfindung sind in den Ansprüchen 2 bis 7 offenbart.

Die Erfindung wird nachfolgend anhand eines in einer Zeichnung dargestellten Ausführungsbeispieles näher erläutert. Dabei zeigen
- Fig. 1: schematisch eine Wandtafel-Einheit in einem an einer Profilschiene eingehängten Zustand,
- Fig. 2: den Querschnitt einer Profilschiene mit einer eingehängten Tragstange und
- Fig. 3: eine Ausgestaltung einer Klemmvorrichtung.

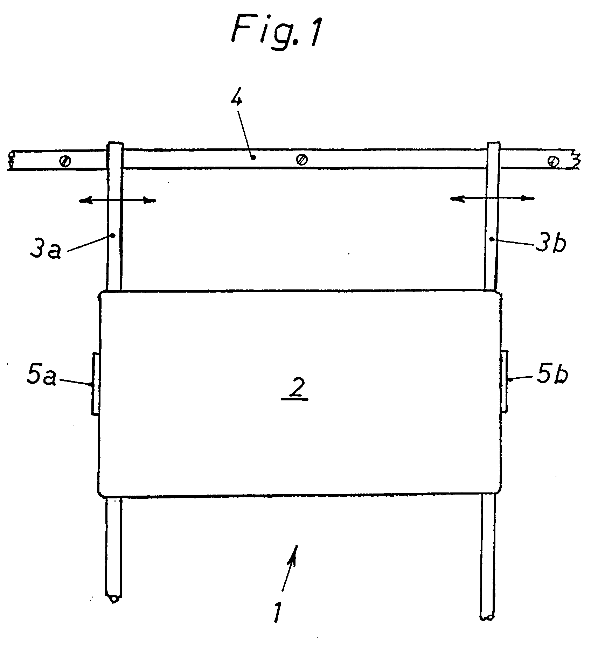

In der Fig. 1 der Zeichnung ist eine Wandtafel-Einheit 1 gezeigt, die aus einer eigentlichen Tafel 2 und zwei mit Abstand voneinander angeordneten Tragstangen 3a, 3b zusammensetzt. Über die beiden Tragstangen 3a, 3b ist die Tafel 2 in eine Profilschiene 4 eingehängt, die beispielsweise an einer Wand befestigt ist. Zur Aufnahme der Tragstangen 3a, 3b sind an der Rückseite der Tafel 2 Führungen 5a, 5b vorgesehen, die in der Fig. 1 nur angedeutet sind. Über die Führungen 5a, 5b kann die eigentliche Tafel 2 auf den Tragestangen 3a, 3b verschoben und damit in ihrer Höhenlage stufenlos eingestellt werden.

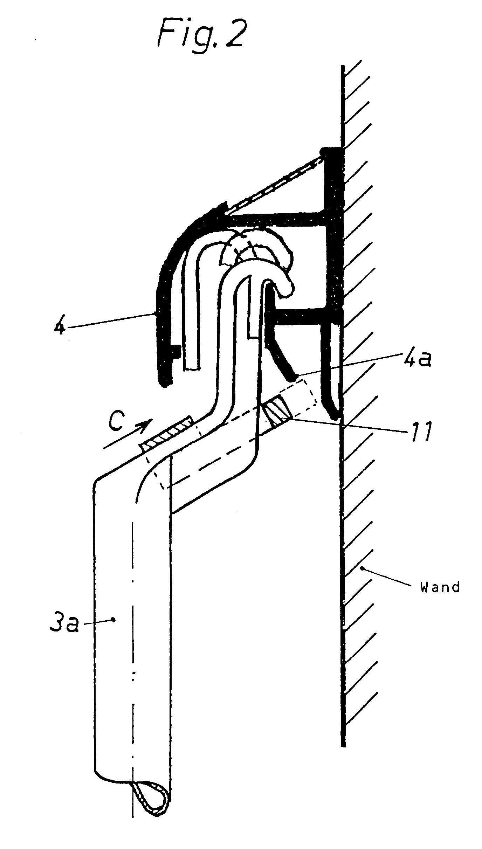

Die beiden Tragestangen 3a, 3b sind an ihren oberen Enden mit jeweils einer Abkröpfung versehen, über die die Tragestangen 3a, 3b in die Profilschiene 4 einhängbar sind (Fig. 2). Die Profilschiene 4 kann die dargestellte Querschnittsform, aber auch jede andere Form aufweisen, die ein Einhängen der Tragstangen 3a, 3b ermöglicht. Um sicherzustellen, daß sich die Tragstangen 3a, 3b bei einem vertikalen Verschieben der Tafel 2 nicht nach oben bewegen können und damit unabsichtlich ihre Lage in der Profilschiene 4 verlassen, ist gemäß der Fig. 2 eine besondere Sperrvorrichtung vorgesehen. Diese Sperrvorrichtung besteht aus einem nur angedeuteten Sperrschieber 11, der nach dem Einhängen der Tragestangen 3a, 3b in Richtung des Pfeiles C verschoben wird. In dieser verschobenen Stellung, die strichliert angedeutet ist, greift der Sperrschieber 11 unter eine Kante 4a der Profilschiene 4 und verhindert, daß die Tragstangen 3a, 3b ihre Lage in der Profilschiene 4 verlassen können.

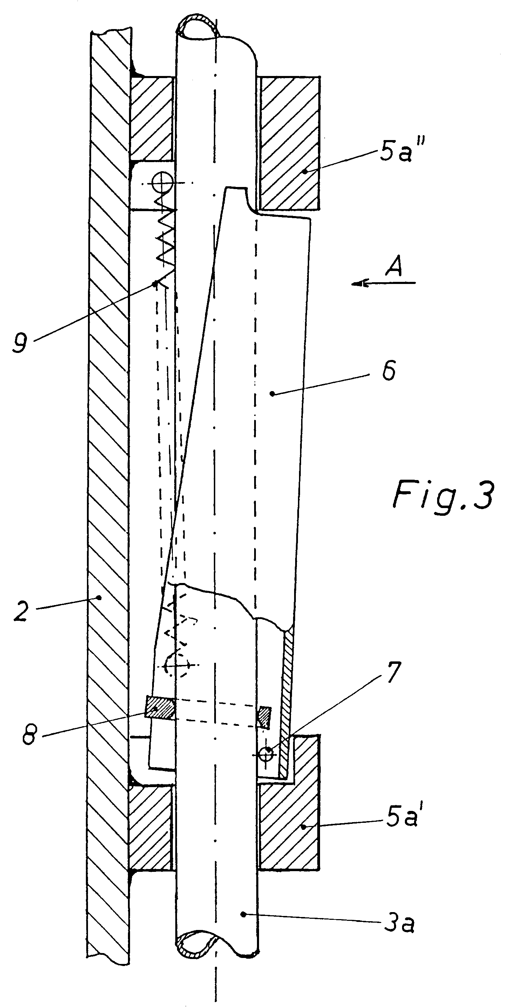

Die Fig. 3 der Zeichnung läßt erkennen, daß jede Führung 5a, 5b aus zwei mit Abstand übereinander angeordneten Führungsblöcken 5a', 5a'' besteht. Die Führungsblöcke 5a', 5a'' weisen jeweils eine Bohrung auf, in der die einen kreisförmigen Querschnitt aufweisenden Tragstangen 3a, 3b geführt sind. Zwischen den beiden Führungsblöcken 5a', 5a'' ist ein Klemmhebel 6 vorgesehen, der um einen fest im Führungsblock 5a'angeordneten Stift 7 aus seiner dargestellten Lage in Richtung des Pfeiles A geschwenkt werden kann. Der Klemmhebel 6 ist fest mit einem Klemmring 8 verbunden, der in der gezeichneten Stellung des Klemmhebels 6 die Lage der Führungen 5a, 5b und damit die Lage der Tafel 2 auf den Tragstangen 3a, 3b sichert. Dabei ist jede Führung 5a, 5b mit einem derartigen Klemmhebel 6 mit Klemmring 8 ausgestattet.

Der Klemmring 8 wird über eine Feder 9, die einerseits am Klemmhebel 6 und andererseits am oberen Führungsblock 5a'' eingehängt ist, in der dargestellten Klemmlage gehalten. Um diese Klemmlage bzw. die Klemmung aufzuheben, ist es erforderlich, den Klemmhebel 6 in Richtung des Pfeiles A, beispielsweise durch Fingerdruck, entgegen der Kraft der Feder 9 zu verschwenken. Dadurch wird die Verkantung des Klemmringes 8 beseitigt und damit die Klemmverbindung zwischen der Führung 5a, 5b und Tragstange 3a, 3b aufgehoben.

Die Tafel 2 weist nun eine solche Breite auf, daß die Klemmhebel 8 der beiden seitlich angeordneten Klemmvorrichtungen 6, 8 mit jeweils einem Finger einer Hand erfaßt werden können, was zu einer Aufhebung der Klemmung führt. Die Tafel 2 ist dann entlang den Tragstangen 3a, 3b verschiebbar und in ihrer Höhenlage stufenlos einstellbar. Werden die beiden Klemmhebel 6 wieder losgelassen, werden sie durch die Kraft der ihnen zugeordneten Feder 9 wieder in die Lage gemäß Fig. 3 zurückgeschwenkt, in der wiederum die Klemmung eintritt. Bei der gezeigten Anordnung und Ausbildung der Klemmvorrichtung 6, 8 wird die Klemmung zusätzlich durch das Gewicht der Tafel 2 unterstützt.

Bei dem beschriebenen Wandtafelsystem kann die Wandtafel Einheit leicht ausgewechselt und gegen eine andere Wandtafel-Einheit ausgetauscht werden. Alle Tafeln 2 der Wandtafel-Einheiten 1 lassen sich dabei leicht stufenlos in vertikaler Richtung verschieben. Es ist daher möglich, eine Tafel 2 bequem in niedriger Höhe zu beschriften und sie dann an den Tragstangen 3a, 3b stufenlos nach oben zu verschieben, damit sie gut gesehen werden kann.

In Abänderung des erläuterten Ausführungsbeispieles ist es möglich, die Klemmvorrichtungen anders auszugestalten, wobei jedoch immer sichergestellt sein muß, daß die Klemmvorrichtungen leicht betätigt werden können und damit die Klemmung kurzzeitig aufgehoben werden kann.

## Patentansprüche

1. Wechsel-Wandtafelsystem für die visuelle Kommunikation, bestehend aus mindestens einer an einer Wand befestigbaren Profilschien (4) und mehreren auswechselbaren Wandtafel-Einheiten (1), die jeweils an mindestens einer Tragstange (3a, 3b) hoheneinstellbar geführt und über dieselbe in die Profilschiene (4) einhängbar sind,
dadurch gekennzeichnet,
daß jede Wandtafel-Einheit (1) über eine unter einer Federkraft (9) stehende, manuell lösbare Klemmvorrichtung (6, 8) an der Tragstange (3a, 3b) gesichert und stufenlos höheneinstellbar ist.

2. Wechsel-Wandtafelsystem nach Anspruch 1,
dadurch gekennzeichnet,
daß jede Wandtafel-Einheit (1) über Führungen (5a, 5b) auf der Tragstange (3a, 3b) verschiebbar ist.

3. Wechsel-Wandtafelsystem nach Anspruch 1 oder 2,
dadurch gekennzeichnet,
daß jede Wandtafel-Einheit (1) mit je einer Klemmvorrichtung (6, 8) an mindestens zwei in die Profilschine (4) einhängbaren Tragstangen (3a, 3b) gehalten ist.

4. Wechsel-Wandtafelsystem nach einem der Ansprüche 1 - 3,
dadurch gekennzeichnet,
daß jede Klemmvorrichtung (6, 8) aus einem im Bereich der Führungen (5a, 5b) angeordneten Klemmhebel (6) mit Klemmring (8) besteht.

5. Wechsel-Wandtafelsystem nach Anspruch 4,
dadurch gekennzeichnet,
daß der Klemmhebel (6) nach hinten über die Führung (5a, 5b) vorsteht und manuell in eine Lösestellung bewegbar ist.

6. Wechsel-Wandtafelsystem nach einem der Ansprüche 1 - 5,
dadurch gekennzeichnet,
daß die Tragestangen (3a, 3b) an ihrem oberen Ende über eine Abkröpfung in die Profilschiene (4) einhängbar ist.

7. Wechsel-Wandtafelsystem nach Anspruch 6,
dadurch gekennzeichnet,
daß mindestens einer Tragestange (3a, 3b) eine die Abkröpfung in der Profilschiene (4) sichernde und aus einem Sperrschieber (11) bestehende Sperrvorrichtung zugeordnet ist.

## Claims

1. Interchangeable display board system for visual communication consisting of at least one profile rail (4) capable of being fastened on a wall and several exchangeable display board units (1), which are each guided in height-adjustable manner on at least one support post (3a, 3b) and can be hung up through the same in the profile rail (4),
characterised in that
each display board unit (1) is secured on the support post (3a, 3b) through a manually releasable clamping device (6, 8) subject to an elastic force (9) and is continuously adjustable in terms of height.

2. Interchangeable display board system according to Claim 1,
characterised in that
each display board unit (1) is displaceable on the support post (3a, 3b) via guides (5a, 5b).

3. Interchangeable display board system according to Claim 1 or 2,
characterised in that
each display board unit (1) is held with a clamping device (6, 8) in each case on at least two support posts (3a, 3b) capable of being hung up in the profile rail (4).

4. Interchangeable display board system according to one of the Claims 1 - 3,
characterised in that
each clamping device (6, 8) consists of a clamping lever (6) with a clamping ring (8) arranged in the region of the guides (5a, 5b).

5. Interchangeable display board system according to Claim 4,
characterised in that
the clamping lever (6) projects towards the rear through the guide (5a, 5b) and can be moved manually into a release position.

6. Interchangeable display board system according to one of the Claims 1 - 5,
characterised in that
at their upper end the support posts (3a, 3b) can be hung up in the profile rail (4) through an angular bend.

7. Interchangeable display board system according to Claim 6,
characterised in that
a locking device securing the angular bend in the profile rail (4) and consisting of a locking slide (11) is associated with at least one support post (3a, 3b).

## Revendications

1. Système de tableau mural interchangeable pour la communication visuelle, constitué par au moins un rail profilé (4) pouvant être fixé à un mur et plusieurs unités de tableau mural interchangeables (1), qui sont guidées respectivement de manière à être réglables en hauteur sur au moins une barre de support (3a,3b) et peuvent être accrochées au moyen de cette barre au rail profilé (4), caractérisé en ce que chaque unité de tableau mural (1) est fixée à la barre de support (3a,3b) au moyen d'un dispositif de serrage (6,8) qui est soumis à une force (9) d'un ressort et est détachable manuellement, et est réglable progressivement en hauteur.

2. Système de tableau mural interchangeable selon la revendication 1, caractérisé en ce que chaque unité de tableau (1) est déplaçable sur la barre de supports (3a,3b) au moyen de guides (5a,5b).

3. Système de tableau mural interchangeable selon la revendication 1 ou 2, caractérisé en ce que chaque unité de tableau mural (1) est retenue par un dispositif respectif de serrage (6,8) sur au moins deux barres de support (3a,3b) pouvant être accrochées dans le rail profilé (4).

4. Système de tableau mural interchangeable selon l'une des revendications 2 ou 3, caractérisé en ce que chaque dispositif de serrage (6,8) est constitué par un levier de serrage (6) disposé dans la zone des guides (5a,5b) et comportant une bague de serrage (8).

5. Système de tableau mural interchangeable selon la revendication 4, caractérisé en ce que le levier de serrage (6) fait saillie vers l'arrière au-delà du guide (5a,5b) et peut être amené manuellement dans une position détachée.

6. Système de tableau mural interchangeable selon l'une des revendications 1-5, caractérisé en ce que la barre de support (3a,3b) peut être accrochée, au niveau de son extrémité supérieure par l'intermédiaire d'une partie coudée, dans le rail profilé (4).

7. Système de tableau mural interchangeable selon la revendication 6, caractérisé en ce qu'un dispositif de blocage, qui fixe la partie coudée dans le rail profilé (4) et est constitué par un coulisseau de blocage (11), est associé à au moins une barre de support (3a,3b).
